# EUROPEAN PATENT APPLICATION

(11) **EP 2 538 064 A1**
(43) Date of publication of application: **26.12.2012**
(21) Application number: 10787254.1
(22) Date of filing: 17.02.2010
(51) Int. Cl.: F02M 25/07, F01N 3/24

(54) **EXHAUST DEVICE OF INTERNAL COMBUSTION ENGINE**

(71) Applicant: Toyota Jidosha Kabushiki Kaisha, Toyota-shi, Aichi 471-8571 (JP)
(72) Inventor: KIMURA, Yuichiro, Toyota-shi Aichi 471-8571 (JP); KATAYAMA, Haruyuki, Toyota-shi Aichi 471-8571 (JP)
(74) Representative: Intès, Didier Gérard André
(86) International application number: PCT/JP2010/000978
(87) International publication number: WO 2011/101891

(57) **Abstract**

An exhaust apparatus for an internal combustion engine comprises: an exhaust heating device (40) provided in an exhaust passage (12) of an internal combustion engine (1) for increasing a temperature of an exhaust gas; an exhaust purification catalyst (13) provided in the exhaust passage (12) downstream from the exhaust heating device (40); an EGR passage (30) for connecting the exhaust passage (12) downstream of the exhaust purification catalyst (13) andanintakepassage (6) of the internal combustion engine (1); a bypass passage (31) for connecting the EGR passage (30) and a point downstream from the exhaust heating device (40) and also upstream from the exhaust purification catalyst (13) in the exhaust passage (12); a bypass valve (34) operable to open/close the bypass passage (31); and a controller (50) for controlling the control valve. When a temperature of the EGR passage (30) is lower than a predetermined reference value, the controller (50) controls the bypass valve (34) to be opened for a supply of an exhaust gas heated by the exhaust heating device (40) through the EGR passage (30) to the intake passage (6).

## Description

### Technical Field

The present invention relates to an exhaust apparatus having an exhaust heating device provided in an exhaust passage in an internal combustion engine for increasing the temperature of an exhaust gas and a recirculation apparatus for recirculating an exhaust gas.

### Background Art

In many internal combustion engines, an EGR (Exhaust Gas Recirculation) passage is provided to connect an exhaust passage and an intake passage. The main purposes are to reduce nitrogen oxides (NOx) in the exhaust gas and improve fuel efficiency under partial load conditions.

In the engine disclosed by Patent Literature 1, an EGR passage is provided to connect an exhaust passage downstream of an exhaust purification catalyst and an intake passage. In this engine, a bypass passage is provided to connect the EGR passage and a point upstream from the exhaust purification catalyst in the exhaust passage. In engine low load operations, when a bypass valve provided in the bypass passage is controlled to open, an exhaust gas at a relatively high temperature flows from the bypass passage, thus improving engine combustion characteristics. The engine is also equipped with a burner for heating a catalyst-supporting filter in order to burn and remove particulates adhering to the filter.

An engine disclosed in Patent Literature 2 is equipped with an EGR cooler in the EGR passage for cooling the exhaust gas. At the time the engine water temperature is low, when cooling water to be introduced into the EGR cooler is heated, water condensation in the EGR cooler can be restricted.

### Citation List

### Patent Literature

PTL 1: Japanese Patent Laid-Open No. H3-74513(1991)
PTL 2: Japanese Patent Laid-Open No. H11-125151(1999)

### Summary of Invention

### Technical Problem

In the engine of Patent Literature 1, however, when the outside air temperature is extremely low (for example, coldest winter season in cold climates), water in exhaust gases may possibly condense in the EGR passage. The condensed water stays in the EGR passage during a low load operation with a low amount of exhaust gases. However, during a high load operation with a high amount of exhaust gases, the condensed water may be pumped into the intake passage by the pressure of the exhaust gas to enter the combustion chamber, the condensed water may damage the engine as a water hammer, and, if a turbocharger is provided, damage an impeller of the turbine. The burner of Patent Literature 1 is not positioned to heat the exhaust gas to be delivered to the bypass passage. In the engine of Patent Literature 2, a heater exclusively for heating the cooling water is required. Further, since the heater is operatedwhen the engine water temperature is lower than a predetermined value, when a temperature difference from the EGR passage is great while the engine water temperature is not so low (for example, coldest winter season in cold climates), it is impossible to restrict water condensation.

The present invention has an obj ect of promoting the removal of condensed water from the inside of an EGR passage.

### Solution to Problem

One aspect of the present invention provides an exhaust apparatus for an internal combustion engine comprising:
an exhaust heating device provided in an exhaust passage of the internal combustion engine for increasing a temperature of an exhaust gas;
an exhaust purification catalyst provided in the exhaust passage downstream from the exhaust heating device;
an EGR passage for connecting the exhaust passage downstream of the exhaust purification catalyst with an intake passage of the internal combustion engine;
a bypass passage for connecting a point downstream from the exhaust heating device and also upstream from the exhaust purification catalyst in the exhaust passage with the EGR passage;
a bypass valve operable to open/close the bypass passage; and
a controller configured to control the bypass valve,
wherein, when a temperature of the EGR passage is lower than a predetermined reference value, the controller controls the bypass valve to be opened for a supply of an exhaust gas heated by the exhaust heating device through the EGR passage to the intake passage.

In this aspect, since the bypass passage connects a point downstream from the exhaust heating device and upstream from the exhaust purification catalyst with the EGR passage, the exhaust gas heated by the exhaust heating device can be fed to the intake passage through the EGR passage, resulting in acquiring a sufficient amount of heat by the exhaust heating device. Since the controller is configured to open the bypass valve when the temperature of the EGR passage is lower than a predetermined reference value, it is possible to preferably restrict water condensation in the EGR passage even if the engine water temperature is high and also a temperature difference from the EGR passage is large (for example, coldest winter season in cold climates).

Preferably, the EGR passage is provided with an EGR cooler for cooling the exhaust gas, and the bypass passage is connected to the EGR passage in a position closer to an intake side than a position of the EGR cooler.

In this aspect, the heat coming from the exhaust heating device through the bypass passage can be forced to act on a portion of the EGR passage positioned closer to the intake side than the EGR cooler as necessary, without passing through the EGR cooler. As a result, the temperature of the portion can be quickly increased.

In this case, preferably, the EGR passage comprises an EGR valve located closer to the intake side than a connection point of the bypass passage for opening/closing the EGR passage, and the controller controls the EGR valve to be closed for a supply of the exhaust gas, having flowed through the bypass passage, to an exhaust side of the EGR passage.

In this aspect, as necessary, the EGR valve can be used to preferably increase the temperature of the EGR cooler. Also, it is considered that a temperature rise is slow in an area closer to the intake side in the EGR cooler in normal use of the EGR passage. However, in the above-described aspect, it is possible to preferably increase the temperature in the area closer to the intake side.

In this case, further preferably, the controller controls the EGR valve to increase the temperature in the intake side of the EGR passage after the temperature of the EGR cooler is increased.

In this aspect, as necessary, the EGR valve is used to preferentially increase the temperature of the EGR cooler in which water condensation is highly likely to be generated, and then to increase the temperature in the intake side of the EGR passage, thus preferably causing generation of condensed water to be restricted.

In another aspect of the present invention, the EGR passage is provided with an EGR cooler for cooling an exhaust gas, and the bypass passage is connected to the EGR passage in a position closer to an exhaust side than a position of the EGR cooler.

In this case, since the heat coming from exhaust heating device acts on the EGR cooler through the bypass passage as necessary, it is possible to preferably restrict water condensation in the EGR passage including the EGR cooler.

It should be noted that means for solving problems in the present invention can be used in possible combinations.

### Advantageous Effects of Invention

According to the present invention, the removal of condensed water in the inside of an EGRpassage can be facilitated.

### Brief Description of Drawings

[Fig. 1] Fig. 1 is a conceptual diagram of a first embodiment according to the present invention;
[Fig. 2] Fig. 2 is a flowchart showing low-pressure EGRpassage heating treatment of the first embodiment;
[Fig. 3] Fig. 3 is a conceptual diagram of a second embodiment according to the present invention;
[Fig. 4] Fig. 4 is a flowchart showing low-pressure EGRpassage heating treatment of the second embodiment;
[Fig. 5] Fig. 5 is a conceptual diagram showing a key part of an exemplary modification of the first embodiment; and
[Fig. 6] Fig. 6 is a conceptual diagram showing a key part of a second exemplary modification of the first embodiment.

### Description of Embodiments

### (First Embodiment)

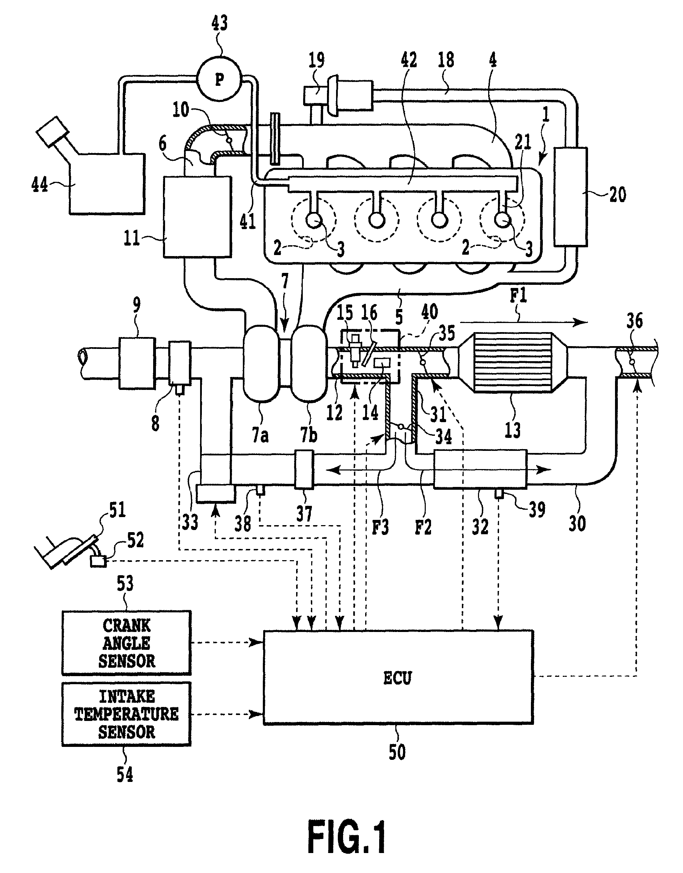

Preferred embodiments of the present invention will be described below in detail. Fig. 1 shows a first embodiment of the present invention. In Fig. 1, an engine body 1 is an internal combustion engine of compression ignition type (i.e. diesel engine) which runs on light gas oil, but may be another type of internal combustion engine. The engine body 1 has combustion chambers 2 respectively provided in four cylinders. In each of the combustion chambers 2 an electronically-controlled fuel injection valve 3 is provided for injecting fuel. The combustion chamber 2 is connected to an intake manifold 4 and an exhaust manifold 5. The intake manifold 4 is coupled to an outlet of a compressor 7a of an exhaust turbocharger 7 through an intake pipe 6. An inlet of the compressor 7a is coupled to an air cleaner 9 through an air flow meter 8.

A throttle valve 10 is located in the intake pipe 6 and driven by a stepper motor. An intercooler 11 is placed around the intake pipe 6 for cooling an intake air flowing in the intake pipe 6. Engine cooling water is guided into the intercooler 11 so that the intake air is cooled by the engine cooling water.

The exhaust manifold 5 is coupled to an inlet of an exhaust turbine 7b of the exhaust turbocharger 7. An outlet of the exhaust turbine 7b is connected to an exhaust purification catalyst 13 by an exhaust pipe 12. A compact oxidation catalyst 14 is disposed in the engine exhaust passage upstream from the exhaust purification catalyst 13, that is, in the exhaust pipe 12. The compact oxidation catalyst 14 has a volume smaller than that of the exhaust purification catalyst 13, and a portion of the exhaust gas flowing into the exhaust purification catalyst 13 flows through the compact oxidation catalyst 14.

The exhaust purification catalyst 13 contains, for example, an oxidation catalyst, a three-way catalyst or a NOx catalyst. The compact oxidation catalyst 14 contains an oxidation catalyst, inwhich, for example, Pt/CeO₂, Mn/CeO₂, Fe/CeO₂, Ni/CeO₂, Cu/CeO₂, or the like can be employed as a catalyst substance. Cordierite or metal may be used for a substrate of each of the catalysts 13 and 14.

A fuel supply valve 15 for supplying fuel to the compact oxidation catalyst 14 is located in the exhaust pipe 12 upstream from the compact oxidation catalyst 14 such that its injection port is exposed to the inside of the exhaust pipe 12. The fuel in a fuel tank 44 is supplied through a fuel pump 43 to the fuel supply valve 15. For the purpose of accelerating combustion, a conduit line, a control valve and a compressor may be provided for supplying combustion air from the outside into the exhaust pipe 12.

A glowplug 16 is disposed in the exhaust pipe 12 downstream from the fuel supply valve 15. The glow plug 16 is placed such that the fuel applied by the fuel supply valve 15 contacts the leading end of the glow plug 16. The glow plug 16 is connected to a direct-current power source and a step-up circuit (neither shown) for feeding power to the glow plug 16. A ceramic heater may be employed instead of the glow plug as ignition means. An impinging plate on which the fuel ejected from the fuel supply valve 15 impinges may be provided in the exhaust pipe 12 for the purpose of promoting fuel atomization. The compact oxidation catalyst 14, the fuel supply valve 15 and glow plug 16 form an exhaust heating device 40. The exhaust heating device 40 is controlled by an ECU 50 which will be described later.

The exhaust manifold 5 and the intake manifold 4 are connected to each other through a high-pressure EGR passage 18. An electronically-controlled EGR control valve 19 is disposed in the high-pressure EGR passage 18. A high-pressure EGR cooler 20 is disposed around the high-pressure EGRpassage 18 for cooling the EGR gas flowing in the high-pressure EGR passage 18. Engine cooling water is guided into the high-pressure EGR cooler 20 so that the EGR gas is cooled by the engine cooling water.

The exhaust pipe 12 and the intake pipe 6 are connected through a low-pressure EGR passage 30. The low-pressure EGR passage 30 connects the exhaust pipe 12 downstream of the exhaust turbocharger 7 and the exhaust purification catalyst 13 with the intake pipe 6 upstream of the exhaust turbocharger 7.

A bypass passage 31 is provided to connect the exhaust pipe 12 and the low-pressure EGR passage 30. The bypass passage 31 connects a point downstream from the exhaust heating device 40 and upstream from the exhaust purification catalyst 13 in the exhaust pipe 12 with the low-pressure EGR passage 30. As a result, the heat of the exhaust heating device 40 can increase the temperature of the exhaust gas supplied into the bypass passage 31. A bypass valve 34 is provided in the bypass passage 31 for opening/closing the bypass passage 31.

A low-pressure EGR cooler 32 is placed around the low-pressure EGR passage 30 for cooling the exhaust gas. The bypass passage 31 is connected to the low-pressure EGR passage 30 at a position closer to the intake side than a position of the low-pressure EGR cooler 32.

In the low-pressure EGR passage 30, a low-pressure EGR valve 33 is provided in a position closer to the intake side than a position of the connection point with the bypass passage 31, for opening/closing the low-pressure EGR passage 30 in normal low-pressure EGR control.

A catalyst inlet valve 35, which opens/closes the exhaust pipe 12, is provided upstream of the exhaust purification catalyst 13 and downstream from the connection point with the bypass passage 31. An exhaust throttle valve 36, which opens/closes the exhaust pipe 12, is provided downstream of the exhaust purification catalyst 13 and downstream from the connection point with the low-pressure EGR passage 30. Further, a FOD (Foreign Object Damage) trapper 37 formed of a metallic mesh for trapping a foreign object is placed in the low-pressure EGR passage 30.

A low-pressure EGR temperature sensor 38 for detecting a temperature of the inside of the low-pressure EGR passage 30 is placed in the low-pressure EGR passage 30 at a point closer to the intake side than the connection point with the bypass passage 31. A cooler temperature sensor 39 for detecting a temperature of the inside of the low-pressure EGR cooler 32 is placed in the low-pressure EGR cooler 32. Each of the temperature sensors 38 and 39 has a thermistor whose resistance value varies with temperatures, and therefore can detect a change in exhaust temperature from a change in resistance value of the thermistor.

Each of the fuel injection valves 3 is coupled to a common rail 42 through the fuel supply pipe 41. The common rail 42 is coupled to a fuel tank 44 through an electronically-controlled fuel pump 43 with a variable discharge rate. The fuel stored in the fuel tank 44 is fed into the common rail 42 by the fuel pump 43, and in turn the fuel supplied into the common rail 42 is fed to the fuel injection valves 3 through each fuel supply pipe 41.

The electronic control unit (ECU) 50 serving as a controller comprises a well-known digital computer, which includes a ROM (Read Only Memory), a RAM (Random Access Memory), a CPU (microprocessor), input ports and output ports which are interconnected by a bidirectional bus.

Output signals of the temperature sensors 38 and 39 are applied to the input port of the ECU 50 through a corresponding AD converter. An accelerator pedal 51 is connected to a load sensor 52 that generates an output voltage proportional to a degree of depression of an accelerator pedal 51. The output voltage of the load sensor 52 is applied to the input port through a corresponding AD converter. Further, connected to the input port is a crank angle sensor 53 that generates an output pulse every time the crankshaft of the engine body 1 rotates, for example, 15 degrees. Further, an intake temperature sensor 54 placed near the throttle valve 10 is connected to the input port

On the other hand, the output port of the ECU 50 is connected to each of the stepper motors for driving the throttle valve 10, the high-pressure EGR control valve 19, the low-pressure EGR control valve 33, the bypass valve 34, the catalyst inlet valve 35 and the exhaust throttle valve 36, through each corresponding drive circuit. The output port is also connected to the fuel injection valves 3 and the fuel pump 43 through each corresponding drive circuit. The operations of those actuators are controlled by the ECU 50. The ROM of the ECU 50 stores a variety of programs, reference values and initial values. Such reference values and initial values include temperature reference values Tmin1, Tmin2 used in processing described later.

The ECU 50 calculates a designated amount of fuel supply on the basis of conditions of the vehicle including values of the air flow meter 8, the load sensor 52 and the crank angle sensor 53, in particular, parameters representing an engine operation state, and then outputs a control signal in order to open the fuel injection valves 3 and 15 for a time period corresponding to the designated amount. In response to the control signal, the amount of fuel corresponding to the designated amount of fuel supply is fed from the fuel injection valves 3 and 15.

The ECU 50 also selectively switches the EGR passages for feeding the EGR gas in accordance with an engine operation state which is determined, for example, based on an engine load factor KL and an engine rotation speed Ne. In this regard, the engine load factor KL refers to a ratio of the engine load to the full load. Specifically, when the engine load factor KL is lower than a first predetermined set load factor KL1, the EGR gas is fed through the high-pressure EGR passage 18 alone. By doing so, it is possible to ensure satisfying response and precisely control the amount of EGR gas to be fed to the engine. In contrast, when the engine load factor KL is higher than the first set load factor KL1 and lower than a second predetermined set load factor KL2, the EGR gas is fed through the low-pressure EGR passage 30 alone. This makes it possible to feed the EGR gas to the engine with reliability even when the engine load factor KL is high. Further, when the engine load factor KL is higher than the second set load factor KL2, the feeding of the EGR gas is prohibited.

The ECU 50 controls the exhaust heating device 40 for operations of fuel supply and ignition in order to increase the temperature of the compact oxidation catalyst 14. A part or all of the supplied fuel is ignited by the glow plug 16, resulting in temperature rise of the exhaust gas. In this regard, the ECU 50 injects a larger amount of fuel than the amount of fuel required by the compact oxidation catalyst 14 as necessary, in order to feed the fuel to the exhaust purification catalyst 13. As a result, it is possible to produce oxidation and combustion of the accumulated particulate matter (PM), and to, if the exhaust purification catalyst 13 is a NOx occlusion reduction catalyst, carry out NOx reduction treatment and SOx poisoning recovery treatment on the exhaust purification catalyst 13.

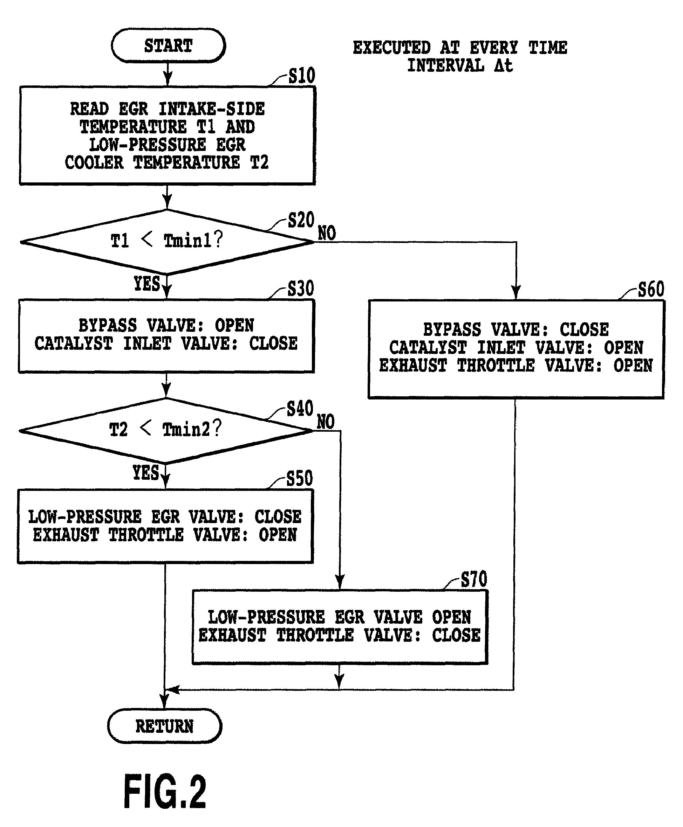

The ECU 50 further carries out the following low-pressure EGR passage heating treatment in parallel with each above-described control. The low-pressure EGR passage heating treatment will be described below with reference to Fig. 2. A processing routine shown in Fig. 2 is repeatedly executed at predetermined time intervals on condition that an ignition switch (not shown) is turned on and the engine body 1 is in operation. In Fig. 2, first, the ECU 50 reads values of an EGR intake-side temperature T1 detected by the low-pressure EGR temperature sensor 38, and a low-pressure EGR cooler temperature T2 detected by the cooler temperature sensor 39 (S10).

Next, the ECU 50 determines whether or not the EGR intake-side temperature T1 thus read is lower than a reference value Tmin1 (S20). If Yes, that is, if the EGR intake-side temperature T1 is lower than the reference value Tmin1, the ECU 50 produces control output to each of the stepper motors driving the bypass valve 34 and the catalyst inlet valve 35 such that the bypass valve 34 is opened and the catalyst inlet valve 35 is closed (S30).

Then, the ECU 50 determines whether or not the low-pressure EGR cooler temperature T2 previously read is lower than a ref erence value Tmin2 (S40). The reference value Tmin2 is assumed to be lower than the reference value Tmin1, but may be higher than or equal to the reference value Tmin1. The determinations in steps S20, S40 will be affirmative if cold starting is made in the coldest winter season in cold climates, for example, when the ambient temperature and the temperatures T1 and T2 are equal to or lower than 10 °C below zero.

If Yes in step S40, that is, if the low-pressure EGR cooler temperature T2 is lower than the reference value Tmin2, the ECU 50 produces control output to each of the stepper motors driving the low-pressure EGR valve 33 and the exhaust throttle valve 36 such that the low-pressure EGR valve 33 is closed and the exhaust throttlevalve 36 is opened (S50) . As a result, the exhaust gas heated by the exhaust heating device 40 skips the exhaust purification catalyst 13 and flows through the bypass passage 31, the low-pressure EGR cooler 32 and the exhaust throttling valve 36 as shown by the arrow F2 in Fig. 1.

If No in step S40, that is, if the low-pressure EGR cooler temperature T2 is higher than or equal to the reference value Tmin2, the ECU 50 produces control output to each of the stepper motors driving the low-pressure EGR valve 33 and the exhaust throttle valve 36 such that the low-pressure EGR valve 33 is opened and the exhaust throttle valve 36 is closed (S70). As a result, the exhaust gas heated by the exhaust heating device 40 does not flow through the low-pressure EGR cooler 32, and flows through the bypass passage 31 and the low-pressure EGR valve 33 as shown by the arrow F3 in Fig. 1.

If the processes in steps S50 and S70 are repeated, temperature of each component of the low-pressure EGR passage 30 is increased, so that the temperatures T1 and T2 rise, and finally a negative determination will be made in step S20. If No in step S20, that is, if the temperature T1 is equal to or higher than the reference value Tmin1, the ECU 50 produces control output to each of the stepper motors driving the bypass valve 34, the catalyst inlet valve 35 and the exhaust throttle valve 36 such that the bypass valve 34 is closed, the catalyst inlet valve 35 is opened and the exhaust throttle valve 36 is opened (S60). As a result, the exhaust gas heated by the exhaust heating device 40 does not flow through the bypass passage 31, and flows through the exhaust purification catalyst 13 and the exhaust throttle valve 36 as shown by the arrow F1 in Fig. 1.

In this regard, in accordance with an EGR valve control routine aside from the main routine, when a predetermined condition for opening the low-pressure EGR valve is satisfied, the low-pressure EGR valve 33 is opened, so that the exhaust gas flows through the low-pressure EGR passage 30 to be recirculated in the intake passage.

As described above, in this embodiment, since the bypass passage 31 connects a point downstream from the exhaust heating device 40 and also upstream from the exhaust purification catalyst 13 and the low-pressure EGR passage 30, the exhaust gas heated by the exhaust heating device 40 can be fed through the low-pressure EGR passage 30 to the intake passage, resulting in acquiring sufficient amount of heat by the exhaust heating device 40. When the temperature of the low-pressure EGR passage 30 is below the predetermined reference value Tmin1 (S20), the ECU 50 controls the bypass valve 34 to be opened (S30) . For this reason, even when the engine water temperature is high and a temperature difference from the low-pressure EGR passage 30 is large (for example, coldest winter season in cold climates), it is possible to preferably restrict water condensation in the low-pressure EGR passage 30.

Also, in the embodiment, the low-pressure EGR passage 30 has the low-pressure EGR cooler 32 and the bypass passage 31 is connected to the low-pressure EGR passage 30 in a position closer to the intake side than the position of the low-pressure EGR cooler 32. For this reason, since the heat coming from the exhaust heating device 40 through the bypass passage 31 does not go through the low-pressure EGR cooler 32 and acts on a portion of the low-pressure EGR passage 30 located closer to the intake side than the low-pressure EGR cooler 32 (S70), it is possible to quickly increase the temperature in an area close to the intake side without loss caused by the low-pressure EGR cooler 32.

Further, in the embodiment, the low-pressure EGR passage 30 is provided with the EGR valve 33 which is located closer to the intake side than a connection point with the bypass passage 31 for opening/closing the low-pressure EGR passage 30. The ECU 50 controls the EGRvalve 33 to be closed (S50) so that the exhaust gas flowing through the bypass passage 31 flows toward the exhaust side of the low-pressure EGR passage 30. Accordingly, the EGR valve 33 can be used to preferably increase the temperature of the low-pressure EGR cooler 32. Also, it is considered that a temperature rise in an area closer to the intake side in the low-pressure EGR cooler 32 is slower than that in an area closer to the exhaust side in normal use of the low-pressure EGR passage 30. However, in the above-described form, it is possible to preferably increase the temperature in the area closer to the intake side.

In this embodiment, further, the EGR 50 controls the EGR valve 33 to increase the temperature in the intake side (that is, an area located closer to the intake pipe 6 than a connection point with the bypass passage 31) of the low-pressure EGR passage 30 on condition that temperature of the low-pressure EGR cooler 32 is increased. As a result of this, the EGR valve 33 is used to increase temperature preferentially in the low-pressure EGR cooler 32 in which water condensation is highly likely to generated, and then to increase temperature in the intake side of the low-pressure EGR passage 30, and therefore, generation of condensed water can preferably be restricted.

### (Second Embodiment)

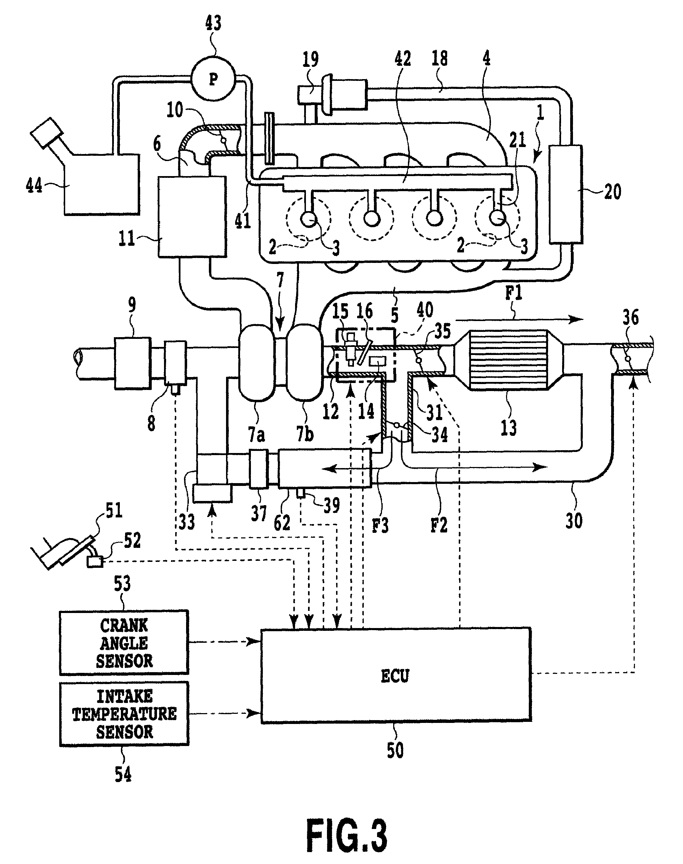

Next, a second embodiment of the present invention will be described. In the second embodiment illustrated in Fig. 3, the bypass passage 31 is connected to the low-pressure EGRpassage 30 at a point closer to the exhaust side than a low-pressure EGR cooler 62. The structure of the low-pressure EGR cooler 62 is similar to that of the low-pressure EGR cooler 32 in the aforementioned first embodiment. The cooler temperature sensor 39 alone detects a temperature within the low-pressure EGR passage 30, and the low-pressure EGR temperature sensor 38 is not provided. The reference values stored in the ROM of the ECU 50 include a temperature reference value Tmin3 used inprocessing described later. The remainder of the mechanical structure in the second embodiment is similar to that in the first embodiment, so that the same reference numerals are used and the details are omitted.

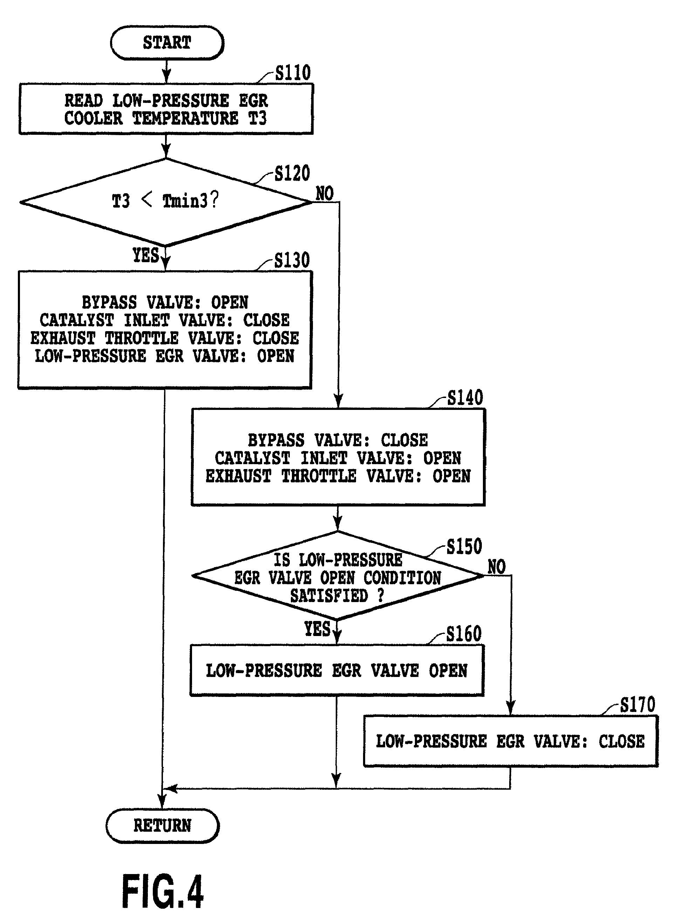

Low-pressure EGR passage heating treatment executed by the ECU 50 in the second embodiment will be described below with reference to Fig. 4. A processing routine shown in Fig. 4 is repeatedly executed at predetermined time intervals on condition that an ignition switch, not shown, is turned on and the engine body 1 is in operation.

In Fig. 4, first, the ECU 50 reads a value of a low-pressure EGR cooler temperature T3 detected by the cooler temperature sensor 39 (S110). Next, the ECU 50 determines whether or not the low-pressure EGR cooler temperature T3 thus read is lower than a reference value Tmin3 (S120). The determination in step S120 is affirmative if cold start is made in the coldest winter season in cold climates, for example, when the ambient temperature and the temperature T3 are equal to or lower than 10 °C below zero.

If Yes in step S120, that is, if the low-pressure EGR cooler temperature T3 is lower than the reference value Tmin3, the ECU 50 produces control output to each of the stepper motors driving the bypass valve 34, the catalyst inlet valve 35, the exhaust throttle valve 36, and the low-pressure EGR valve 33 such that the bypass valve 34 is opened, the catalyst inlet valve 35 is closed, the exhaust throttle valve 36 is closed and the low-pressure EGR valve is opened (S130). As a result, the exhaust gas heated by the exhaust heating device 40 flows through the bypass passage 31 and the low-pressure EGR cooler 62 as shown by the arrow F3 in Fig. 3.

If the process in step S130 is repeated, the temperature of each component of the low-pressure EGRpassage 30 is increased, so that the temperature T3 rises, and a negative determination is made in step S120. If No in step S120, that is, if the low-pressure EGR cooler temperature T3 is higher than or equal to Tmin3, the ECU 50 produces control output to each of the stepper motors driving the bypass valve 34, the catalyst inlet valve 35 and the exhaust throttle valve 36 such that the bypass valve 34 is closed, the catalyst inlet valve 35 is opened and the exhaust throttle valve 36 is opened (S140).

Then, the ECU 50 determines whether a predetermined condition for opening the low-pressure EGR valve is satisfied (S150). The low-pressure EGR valve open condition is that, for example, as described earlier, an engine load factor KL is higher than a first set load factor KL1 and lower than a second set load factor KL2 which has been predetermined. If Yes, that is, if the low-pressure EGR valve open condition is satisfied, the low-pressure EGR valve 33 is opened (S160). As a result, the exhaust gas heated by the exhaust heating device 40 flows through the low-pressure EGR passage 30 including the low-pressure EGR cooler 62 without passing through the bypass passage 31.

If No in step S50, that is, the low-pressure EGR valve open condition is not satisfied, the low-pressure EGR valve 33 is closed (S170). As a result, the exhaust gas heated by the exhaust heating device 40 flows through the exhaust purification catalyst 13 without passing through the bypass passage 31 and the low-pressure EGR passage 30.

As described above, in this embodiment, the bypass passage 31 is connected to the low-pressure EGR passage 30 at a point closer to the exhaust side than the low-pressure EGR cooler 62. For this reason, in addition to similar advantageous effects to those of the first embodiment, the heat coming from the exhaust heating device 40 is routed through the bypass passage 31 and acts on the low-pressure EGR cooler 62, and therefore, it is possible to preferably restrict water condensation in the low-pressure EGRpassage 3 0 including the low-pressure EGR cooler 62.

### (Exemplary Modification 1)

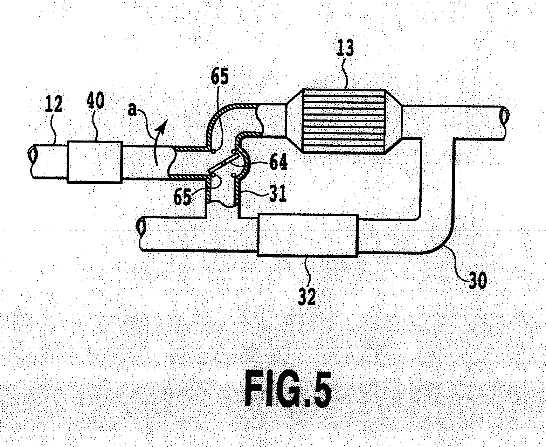

Fig. 5 illustrates an exemplary modification of the first embodiment. In the exemplary modification, instead of the bypass valve 34 and the catalyst inlet valve 35 of the first embodiment, a single change-over valve (directional control valve) 64 is employed as shown in Fig. 5. In the state shown in Fig. 5, the downstream side of the exhaust heating device 40 is connected to the exhaust purification catalyst 13. When the change-over valve 64 rotates clockwisely (in the direction of arrow "a" in Fig. 5), the downstream side of the exhaust heating device 40 is connected to the bypass passage 31. A gasket 65 is preferably disposed around the valve body for the purpose of promoting the sealing properties of the change-over valve 64. According to the exemplary modification, the opening of the bypass valve 34 and the closing of the catalyst inlet valve 35, as well as the closing of the bypass valve 34 and the opening of the catalyst inlet valve 35 operated in the first embodiment can be achieved bythesinglechange-overvalve64, thus providing simplification of structure and control. It should be noted that the change-over valve 64 can be suitably used in the second embodiment.

### (Exemplary Modification 2)

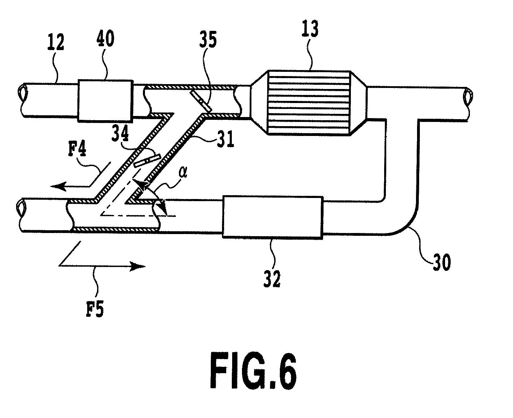

Fig. 6 illustrates a second exemplary modification of the first embodiment. In this exemplary modification, as shown in Fig. 6, an angle α at which the bypass passage 31 intersects the low-pressure EGR passage 30 is defined as an acute angle. With this structure, a flow from the bypass passage 31 toward the intake side of the low-pressure EGR passage 30 (shown by the arrow F4 in Fig. 6) is preferably produced. In this manner, since a flow toward the low-pressure EGR cooler 32 (shown by the arrow F5) is restricted, the exhaust throttle valve 36 (see Fig. 1) located downstream of the exhaust purification catalyst 13 can be omitted, thus achieving simplification of structure and control.

The present invention is described somewhat concretely, but it should be understood that various modifications/alterations and changes may occur without departing from the sprit and scope of the invention as defined in the appended claims. In each of the aforementioned embodiments, any, of the temperature reference values Tmin1, Tmin2, Tmin3 is described as a predetermined fixed value, but one or more of the values may be dynamically set based on a vehicle state (for example, an engine water temperature). Also, each valve is described in two closing and opening modes, but may be changed in the degree of opening between the two modes in a multistep or continuous manner.

In each of the aforerementioned embodiments, the temperature of the low-pressure EGR passage 30 is detected directly by the temperature sensors 38 and 39. However, the temperature of the low-pressure EGR passage may be estimated based on, for example, a detection value of the intake temperature sensor 54 which is placed in the vicinity of the throttle valve 10. Further, the present invention is applicable to an engine without a turbocharger.

### Reference Signs List

- 4: Intake manifold
- 5: Exhaust manifold
- 6: Intake pipe
- 7: Turbocharger
- 12: Exhaust pipe
- 13: Exhaust purification catalyst
- 14: Compact oxidation catalyst
- 18: High-pressure EGR passage
- 30: Low-pressure EGR passage
- 31: Bypass passage
- 32: Low-pressure EGR cooler
- 40: Exhaust heating device
- 50: ECU

## Claims

1. An exhaust apparatus for an internal combustion engine, comprising:
an exhaust heating device provided in an exhaust passage of the internal combustion engine for increasing a temperature of an exhaust gas;
an exhaust purification catalyst provided in the exhaust passage downstream from the exhaust heating device;
an EGR passage for connecting the exhaust passage downstream of the exhaust purification catalyst with an intake passage of the internal combustion engine;
a bypass passage for connecting a point downstream from the exhaust heating device and also upstream from the exhaust purification catalyst in the exhaust passage with the EGR passage;
a bypass valve operable to open/close the bypass passage; and
a controller configured to control the bypass valve, wherein, when a temperature of the EGR passage is lower than a predetermined reference value, the controller controls the bypass valve to be opened for a supply of an exhaust gas heated by the exhaust heating device through the EGR passage to the intake passage.

2. The exhaust apparatus for an internal combustion engine according to claim 1, wherein
the EGR passage is provided with an EGR cooler for cooling the exhaust gas, and
the bypass passage is connected to the EGR passage in a position closer to an intake side than a position of the EGR cooler.

3. The exhaust apparatus for an internal combustion engine according to claim 2, wherein
the EGR passage is provided with an EGR valve for opening/closing the EGR passage, said EGR valve being located closer to the intake side than a connection point of the bypass passage, and
the controller controls the EGR valve to be closed such that the exhaust gas, having flown through the bypass passage, is supplied to an exhaust side of the EGR passage.

4. The exhaust apparatus for an internal combustion engine according to claim 3, wherein the controller controls the EGR valve to increase the temperature in the intake side of the EGR passage after temperature of the EGR cooler is increased.

5. The exhaust apparatus for an internal combustion engine according to claim 1, wherein the EGR passage is provided with an EGR cooler for cooling an exhaust gas, and the bypass passage is connected to the EGR passage in a position closer to an exhaust side than a position of the EGR cooler.
